# FASCICULE DE BREVET EUROPEEN

(11) **EP 0 709 343 B1**
(45) Date de publication et mention de la délivrance du brevet: **12.01.2000**
(21) Numéro de dépôt: 95402287.7
(22) Date de dépôt: 13.10.1995
(51) Int. Cl.: C03B 29/08, C03B 25/08, C03B 29/16, C03B 35/14, C03B 35/20

(54) **Fours à passage continu pour le chauffage de feuilles de verre à la température de bombage et/ou de trempe**
Kontinuierlichen Ofen zum Heizen von Glasscheiben auf Biege- und/oder Härtungstemperatur
Furnace for continuously heating up glass-sheets to their bending and/or tempering temperature

(30) Priorité: 26.10.1994 DE 4438261
(43) Date de publication de la demande: 01.05.1996
(73) Titulaire: SAINT-GOBAIN VITRAGE, 92400 Courbevoie (FR)
(72) Inventeur: Kuster, Hans-Werner, D-52066 Aachen (DE); Diederen, Werner, D-52134 H'Rath (DE); Bremer, Carsten, D-52499 Baesweiler (DE); Korsten, Wilfried, D-52525 Heinsberg (DE); Prömper, Hans-Josef, D-52078 Aachen (DE); Zanders, Reiner, D-52146 Würselen (DE)
(74) Mandataire: Muller, René

(56) Documents cités:
- DE-A- 1 471 831
- FR-A- 321 171
- FR-A- 596 657
- FR-E- 41 519
- US-A- 2 111 370

## Description

La présente invention concerne un four à passage continu pour le chauffage de feuilles de verre à leur température de bombage et/ou de trempe, comportant un système de transport acheminant les feuilles de verre en position horizontale à travers le four.

Pour chauffer des feuilles de verre à leur température de bombage et/ou de trempe, des fours comportant un système de transport formé de rouleaux transporteurs entraînés connus d'après le document DE-A-2 319 049, se sont largement répandus. Dans ces fours à passage continu à rouleaux connus, les feuilles de verre sont chacune soutenues par les génératrices supérieures des rouleaux transporteurs cylindriques successifs. Dans la zone d'extrémité chaude du four dans laquelle les feuilles de verre ont déjà atteint leur température de bombage, cela peut mener, selon la vitesse de transport et selon l'épaisseur des feuilles de verre, à des déformations légères, mais optiquement perturbantes, des feuilles de verre lorsqu'elles fléchissent faiblement entre les rouleaux transporteurs sous l'effet de leur propre poids. Cet inconvénient pèse d'autant plus que l'épaisseur des feuilles de verre à traiter est faible.

Pour réduire ou éviter les déformations apparaissant dans le cas desdits fours à passage continu à rouleaux, il est par exemple connu d'après le document DE-A1-2 741 098 d'installer, entre les rouleaux transporteurs, en dessous du plan de transport, des buses par lesquelles de l'air chaud est soufflé contre le dessous des feuilles de verre. Etant donné que la pression dynamique s'opposant à la force de gravité de la feuille de verre ne peut compenser, en l'occurrence, qu'une partie du poids de la feuille de verre, de telle sorte qu'entre les rouleaux et la feuille de verre subsiste encore une force de friction suffisamment élevée pour assurer le déplacement de la feuille de verre, le risque de déformation des feuilles de verre avec un tel four ne peut pas être complètement éliminé.

Un soutien uniforme des feuilles de verre peut être réalisé au moyen de fours à lit de gaz ou à coussin d'air dans lesquels, via un lit de support pourvu d'ouvertures d'alimentation pour du gaz chaud ou de l'air chaud, un matelas de gaz est créé. Dans de tels fours connus par exemple par les documents DE-A-1 471 986 ou DE-B-1 431 615, pour le transport des feuilles de verre sont prévus des dispositifs supplémentaires qui, par exemple dans le cas d'un lit de support monté incliné, sont constitués de rouleaux entraînés agissant sur le côté inférieur des feuilles de verre, ou, dans le cas d'un lit de support monté horizontal, sont constitués d'organes entraîneurs montés sur des chaînes, qui agissent sur le bord postérieur des feuilles de verre. Avec de tels fours, des déformations des feuilles de verre causées par le poids de ces feuilles peuvent être évitées avec certitude, mais ces fours sont, en règle générale, très onéreux.

Comme mentionné plus haut, des déformations des feuilles de verre résultant d'un soutien non uniforme dans la partie chaude du four, pèsent d'autant plus que les feuilles de verre sont minces. Il existe cependant une tendance, qui va en s'amplifiant, de bomber et le cas échéant de tremper des feuilles de verre relativement minces de, par exemple 2mm ou moins, pour transformer de telles feuilles de verre minces en vitrages en verre feuilleté, en particulier en vitrages latéraux résistants aux effractions pour les automobiles. Dans cette application, la qualité optique des feuilles de verre individuelles est particulièrement importante, parce que des défauts optiques des feuilles de verre individuelles ont un effet amplificateur dans le vitrage en verre feuilleté.

L'invention a, par conséquent, pour but de procurer un four pour le chauffage de feuilles de verre à leur température de bombage et/ou de trempe, qui, dans le cadre d'un aspect constructif simple, assure un soutien uniforme de la feuille de verre sur la totalité de sa surface, de telle sorte que des déformations des feuilles de verre sous l'effet de leur propre poids soient évitées.

Suivant l'invention, ce but est atteint dans le cas d'un four du type spécifié par le fait que le système de transport comprend, à l'intérieur du four, une série de plateaux de support qui comportent chacun un cadre rigide garni, à la manière d'une peau de tambour, d'une membrane résistant à la chaleur à titre de surface d'appui pour une feuille de verre.

Alors que dans le four à passage continu connu, les feuilles de verre se déplacent par rapport aux corps de support, dans le cas de l'invention, elles sont chacune posées sur un support qui, en tant que tel, est transporté conjointement avec la feuille de verre à travers le four. Ceci d'une part offre l'avantage qu'aucun dommage superficiel des feuilles de verre ne peut être provoqué par un déplacement par rapport aux corps de support. D'autre part, le but principal de l'invention est atteint par le fait que les feuilles de verre sont posées par la totalité de leur surface sur le substrat qui les porte. Dans ce cas, il est particulièrement significatif que le substrat portant la feuille de verre soit fait d'une membrane qui, grâce à sa faible masse, présente une faible capacité thermique et une bonne conductibilité thermique. Cette membrane de support doit être conçue pour ne pas influencer sensiblement l'amenée de chaleur à la face inférieure de la feuille de verre, de telle sorte que le chauffage des feuilles de verre des deux côtés s'effectue environ à la même vitesse de chauffage. En effet, lorsque l'amenée de chaleur aux deux côtés des feuilles de verre est différente, ceci entraîne un cambrage des feuilles de verre, car ces feuilles de verre se dilatent superficiellement davantage du côté qui est chauffé plus rapidement que de l'autre côté.

Une vitesse de chauffage absolument égale des deux côtés des feuilles de verre ne peut être que difficilement atteinte même à l'aide du dispositif conforme à l'invention. Même lorsque la feuille de verre est posée sur un support du type membrane, dans un four à rayonnement le dessous des feuilles de verre s'échauffe, en règle générale, plus rapidement que le dessus. Ceci est dû au fait que le rayonnement infrarouge est absorbé davantage par la matière de la membrane de support que par le côté supérieur de la feuille de verre et que le transfert de chaleur de la membrane à la feuille de verre par conduction thermique s'effectue assez rapidement. Dans ce cas également, les feuilles de verre se cambreront donc facilement. On peut cependant remédier à ce faible effet de cambrage, suivant l'invention, en adaptant la tension de la membrane de support à la cambrure qui s'installe, en choisissant la tension de telle sorte que la flexion de la membrane corresponde à la cambrure de la feuille de verre. De cette façon, les feuilles de verre même restent soutenues de manière uniforme sur la totalité de leur surface, lorsqu'elles se cambrent plus ou moins fortement. En revanche, dans le cas d'un substrat de support plan rigide, le cambrage de la feuille de verre aurait pour conséquence que le poids la feuille serait entièrement supporté par la zone centrale restant en contact avec le support. Ceci mènerait cependant inéluctablement à une déformation bosselée superficielle de la feuille de verre qui ne pourrait pas être complètement éliminée même lors d'une opération de pressage ultérieure.

Le four conforme à l'invention a, en outre, l'avantage essentiel que l'opération du transfert de la feuille de verre chauffée à l'extrémité du four sur une forme de bombage située en aval sera sensiblement simplifiée. En effet, alors que, dans les fours à passage continu traditionnels, avant le transfert de la feuille de verre chaude sur la forme de bombage, un positionnement précis de la feuille de verre est requis, c'est-à-dire un déplacement de la feuille de verre dans une position établie avec précision, ou au lieu de cela une détection par des techniques de mesure de la position réelle suivie d'un pilotage correspondant des outils de transfert, cette étape de processus est superflue dans le cas du four conforme à l'invention. Dans le système de transport conforme à l'invention, la feuille de verre conserve en effet sans changement sa position relative à l'égard du plateau de support en question, à l'intérieur du four. Les plateaux de support eux-mêmes peuvent cependant être amenés dans une position déterminée avec précision, de manière simple, dans le poste de dépôt à l'entrée du four et dans le poste de transfert à l'autre extrémité du four par des moyens mécaniques appropriés, de sorte que la position de la feuille de verre elle-même est déterminée automatiquement. Dans le cas du four conforme à l'invention, il suffit donc, lors du dépôt de la feuille de verre à l'entrée du four sur le plateau de support en question d'effectuer un positionnement précis de la feuille de verre, grâce à quoi la position de la de verre chaude à l'autre extrémité du four est donnée automatiquement. De cette façon, l'opération de positionnement, qui s'avère relativement difficile pour une feuille de verre se trouvant à sa température de déformation, peut être effectuée d'avance dans la zone froide en avant du four, ce qui représente un avantage essentiel au plan des conditions de production.

Le stockage et l'entraînement des plateaux de support individuels peuvent s'effectuer de diverses manières. ainsi, il est par exemple possible de monter les plateaux de support individuels sur une chaîne transporteuse sans fin et d'installer ce transporteur à plateaux avec son brin supérieur et son brin inférieur entièrement à l'intérieur du four. Une telle réalisation du four est particulièrement économique du point de vue énergétique. Au lieu de cela, les plateaux de support peuvent cependant aussi être renvoyés en circuit fermé à l'extérieur du four, comme c'est le cas habituellement par exemple dans un four de bombage du type à squelettes.

L'invention prévoit d'une part un entraînement de ces plateaux supports au sein d'un four d'axe longitudinal horizontal, c'est-à-dire un four dans lequel les plateaux supports suivent une trajectoire horizontale pour amener les feuilles de verre depuis l'entrée du four jusqu'à l'autre extrémité de ce four.

Selon une variante de l'invention, l'entraînement de ces plateaux supports se fait dans un four d'axe longitudinal vertical, c'est-à-dire un four dans lequel les plateaux supports suivent essentiellement une trajectoire verticale pour amener les feuilles de verre depuis l'entrée du four jusqu'à l'autre extrémité de ce four.

D'autres avantages et détails de l'invention ressortiront des revendications dépendantes et de la description suivante de divers exemples de réalisation donnés avec référence aux dessins annexés, dans lesquels :
- la figure 1 est une vue en perspective en partie arrachée de la structure de base d'un four conforme à l'invention;
- la figure 2 est une vue en perspective de la structure d'un plateau de support;
- la figure 3 est une vue en coupe longitudinale d'un four conforme à l'invention avec retour des plateaux de support à l'intérieur du four;
- la figure 4 est une vue en perspective d'un four conforme à l'invention avec retour des plateaux de support à l'extérieur du four, et
- la figure 5 est une vue en coupe longitudinale d'un four conforme à l'invention dont l'axe longitudinal est vertical.

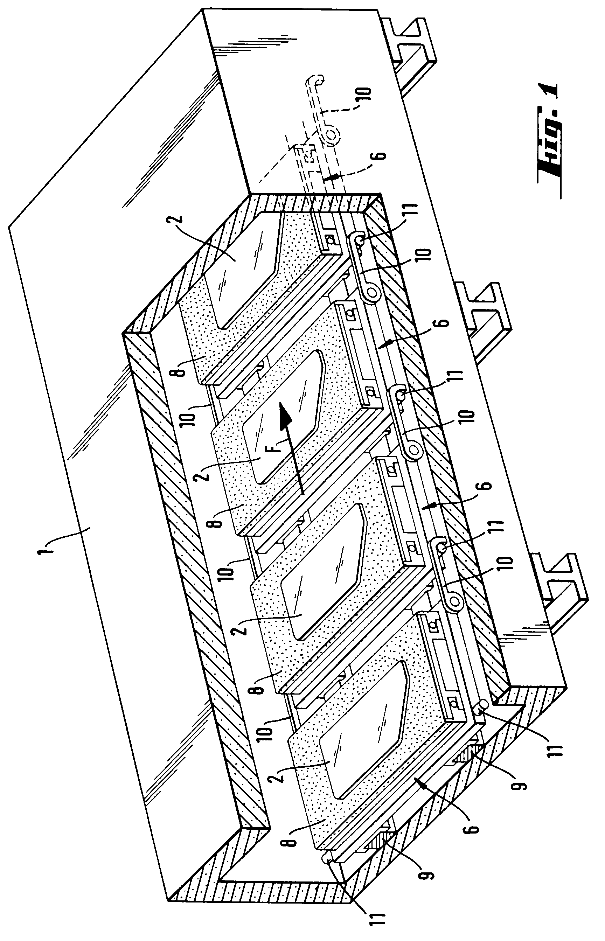

Comme le montre la figure 1, un four conforme à l'invention a essentiellement la forme d'un four tunnel 1 dans lequel les feuilles de verre 2 sont transportées selon une direction horizontale en position horizontale dans le sens de la flèche F à travers le four et sont, en l'occurrence, chauffées à leur température de bombage ou de trempe d'environ 650°C. Le chauffage est assuré par les dispositifs de chauffage électriques habituels qui, par souci de clarté, n'ont pas été représentés. Dans le cas du four tunnel 1, il s'agit du reste d'un four au moins largement fermé qui ne présente des ouvertures qu'au début et à la fin, dans ses parois d'about, pour l'entrée des feuilles de verre froides et la sortie des feuilles de verre chauffées. Selon la construction du système de transport, le four peut également présenter des fentes longitudinales continues dans ses parois latérales dans lesquelles des éléments d'accouplement appropriés se déplacent, ces éléments menant à un dispositif d'entraînement installé à l'extérieur du four.

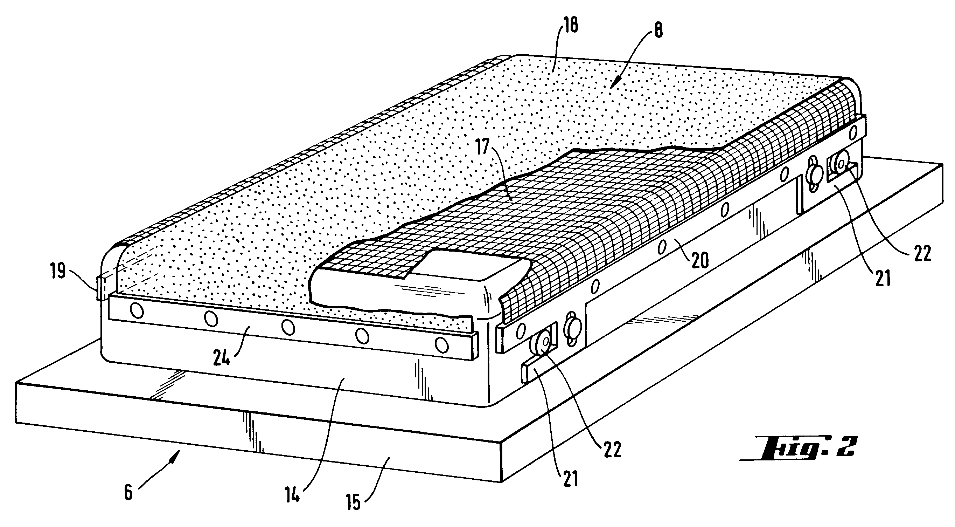

Le système de transport au moyen duquel les feuilles de verre sont transportées à travers le four 1 comprend une série de plateaux de support à membrane 6 disposés les uns derrière les autres dans le sens longitudinal du four et sur lesquels les feuilles de verre planes 2 sont placées. Les plateaux de support à membrane 6 sont chacun essentiellement constitués d'un cadre fait d'un profilé métallique qui est garni à la manière d'une peau de tambour d'une membrane 8 en une matière résistant à la chaleur. La structure d'un tel plateau de support à membrane 6 sera expliquée en détail plus loin avec référence à la figure 2. Les plateaux de support à membrane 6 sont montés déplaçables d'une manière adéquate dans le sens longitudinal du four, par exemple sur des roues non représentées roulant sur des rails 9. Les plateaux de support à membrane 6 voisins l'un de l'autre sont reliés l'un à l'autre par l'intermédiaire de loquets 10. Les loquets 10 sont montés à pivotement sur une extrémité du plateau de support à membrane et viennent en prise via un tenon 11 avec l'extrémité opposée du plateau de support à membrane voisin, de sorte que les plateaux de support à membrane 6, après enlèvement de la feuille de verre à l'extrémité du four, sont désaccouplés, en vue de leur retour, par levée du loquet 10 associé à chacun d'eux. Après que les plateaux de support à membrane 6 ont été renvoyés en circuit fermé vers l'entrée du four, ils sont à nouveau déposés sur les rails 9 et sont accouplés par l'intermédiaire des loquets 10 au plateau à membrane 6 précédent.

Comme la figure 2 le montre en détail, chaque plateau de support à membrane 6 comprend un cadre, par exemple rectangulaire 14, fait de barres ou de tubes profilés. Le cadre 14 est, dans le cas représenté, monté sur un bâti de support 15 qui, en tant que tel, est pourvu de moyens appropriés pour le transport à travers le four. La membrane 8 faite d'un tissu résistant à la chaleur est tendue sur le cadre 14. Le tissu résistant à la chaleur peut, par exemple, être un tissu en fibres de verre. Des structures tissées en fibres métalliques résistant à la chaleur se sont avérées particulièrement adéquates à cet effet. La membrane 8 doit être maintenue sous une tension telle qu'elle forme une surface plane dans toute la mesure du possible. Suite à la dilatation thermique, la membrane 8 perd bien entendu de la tension et s'affaisse quelque peu sous l'influence du poids de la feuille de verre. Comme on l'a déjà mentionné en détail précédemment, cette flexion ne nuit cependant pas à la feuille de verre en ce qui concerne d'éventuelles déformations, parce que la feuille de verre, du fait de son faible cambrage, repose entièrement sur la membrane, de sorte que la charge par unité de surface est très uniforme.

Une structure de membrane constituée de deux épaisseurs de tissu superposées, à savoir un tissu inférieur tissé 17 et un tissu supérieur tissé ou à mailles 18 s'est avérée particulièrement satisfaisante. L'épaisseur de tissu tissé inférieure 17 doit garantir la tension nécessaire de la membrane, tandis que l'épaisseur de tissu tissé ou à mailles supérieure 18 est sélectionnée pour constituer un substrat optimum pour les feuilles de verre.

Le tissu 17 est disposé et tendu de façon que les fils de chaîne s'étendent dans le sens des forces assurant la tension. Le tissu tissé 17 est fixé à l'une des extrémités des fils de chaîne au moyen d'une latte 19 sur la surface latérale extérieure du cadre 14. A l'extrémité opposée, une latte métallique 20 est reliée à demeure au tissu 17. La latte métallique 20 est pourvue de saillies de tension en forme de crochet 21. Les saillies de tension en forme de crochet 21 s'engagent derrière des disques cylindriques tournants 22 qui sont montés en rotation excentrique sur le cadre 14. En tournant ces disques cylindriques 22 montés excentriquement, on peut tendre le tissu 17.

Pour l'épaisseur supérieure 18, on utilise de préférence, un tissu à mailles qui, comme tel, présente une élasticité supérieure à celle d'un tissu tissé et dont la structure fine s'adapte en conséquence convenablement à la surface du verre. Le tissu à mailles rectangulaire 18 est également fixé le long d'un côté au cadre 14 au moyen d'une latte métallique 24, tandis que le côté opposé est pourvu, comme le tissu tissé 17, d'une latte de tension au moyen de laquelle le tissu à mailles 18 est tendu.

Les dimensions en plan du cadre 14 et de la membrane 8 doivent être choisies telles que les dimensions intemes du cadre 14 soient plus grandes que les dimensions en plan des feuilles de verre à transporter, de telle sorte que celles-ci reposent entièrement sur la zone tendue libre de la membrane 8 à l'intérieur du cadre 14.

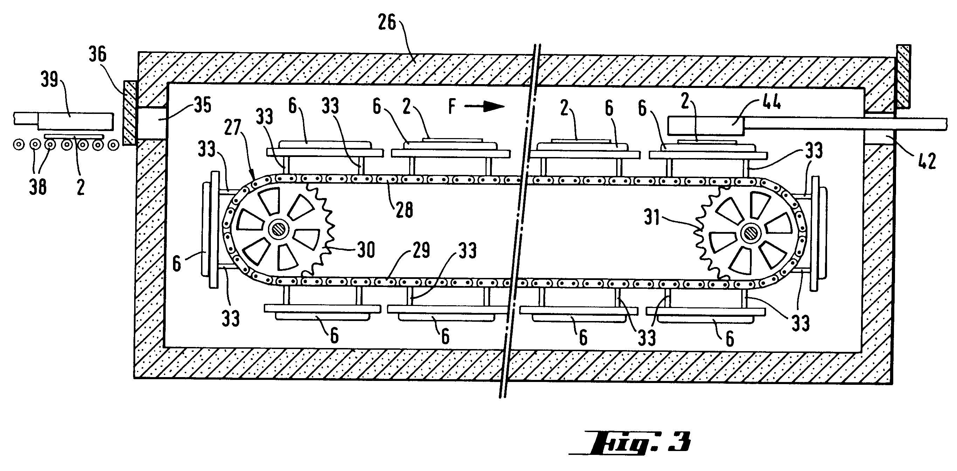

Etant donné que les plateaux de support à membrane 6, après enlèvement des feuilles de verre chaudes, doivent être renvoyées en circuit fermé vers l'extrémité froide du four, un système de transport correspondant est nécessaire à cet effet. Une première forme de réalisation d'un four équipé d'un système de transport convenant à cet effet est illustrée sur la figure 3. Dans ce cas, l'ensemble du dispositif de transport est installé à l'intérieur de l'enceinte 26 du four. Le dispositif de transport est constitué essentiellement d'une bande transporteuse à chaîne sans fin 27 comportant un brin supérieur 28 pour le transport des feuilles de verre dans le sens de la flèche F et un brin inférieur 29 pour le retour des plateaux de support à membrane 6 vides. La bande transporteuse à chaîne 27 passe sur des roues à chaîne correspondantes 30 et 31 dont l'une est mue en rotation, par l'intermédiaire d'un arbre d'entraînement s'étendant vers l'extérieur, par un mécanisme d'entraînement installé à l'extérieur de l'enceinte 26 du four. Chaque plateau de support à membrane 6 est fixé par des colonnettes 33 sur la bande transporteuse à chaîne 27.

A l'extrémité froide du four, les plateaux de support à membrane 6 sont chargés des feuilles de verre 2 à travers l'ouverture 35 qui peut être fermée par une porte 36. A cet effet, les feuilles de verre 2 qui sont acheminées par exemple sur un transporteur à rouleaux 38 jusqu'à proximité du four, sont positionnées sur ce transporteur à rouleaux 38, c'est-à-dire qu'elles sont amenées dans une position prédéterminée avec précision. Le positionnement précis à cet endroit est important pour l'ensemble du processus ultérieur, en particulier pour le processus de bombage effectué en aval du four. A l'aide d'un plateau-ventouse 39 qui se trouve dans une position définie au-dessus de la feuille de verre 2 positionnée, la feuille de verre 2 est soulevée du transporteur à rouleaux 38. Après ouverture de la porte 36, la feuille de verre 2 est transportée dans le four d'une distance prédéterminée avec précision et est déposée dans ce four sur un plateau de support à membrane 6 qui, à l'instant du dépôt de la feuille de verre 2, occupe également une position définie avec précision.

D'une manière analogue, l'enlèvement des feuilles de verre chaudes à l'extrémité du four s'effectue à travers l'ouverture 42 au moyen du plateau-ventouse 44 déplaçable horizontalement. Dans ce cas-ci également, il faut à nouveau que le plateau-ventouse 44 et le plateau de support à membrane 6 concerné occupent, au moment du transfert de la feuille de verre chaude, chacun une position relative déterminée avec précision. Le contrôle de position nécessaire à cet effet peut également être assuré par des moyens connus avec une précision relativement élevée. Après la reprise de la feuille de verre chaude 2 par le plateau-ventouse 44, ce dernier pénètre dans le poste de bombage voisin, non représenté, et dépose la feuille de verre sur la forme de bombage inférieure. Etant donné que ce déplacement horizontal du plateau-ventouse 44 s'effectue également sur une distance de parcours prédéterminée avec précision, on obtient ainsi automatiquement le positionnement exact exigé de la feuille de verre chaude sur la forme de bombage.

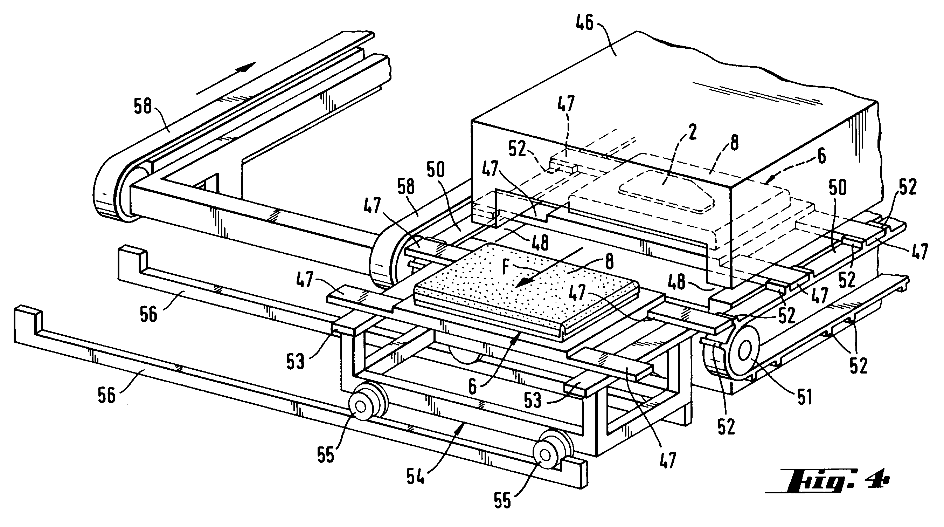

La figure 4 illustre une autre forme de réalisation d'un four conforme à l'invention équipé d'un autre système de transport, dans lequel les plateaux de support à membrane 6, après l'enlèvement des feuilles de verre 2 sont renvoyés à l'extérieur du four 46 vers l'extrémité froide de celui-ci. Dans ce cas, le plateau de support à membrane 6 repose sur deux rails de support 47 qui s'étendant à travers des fentes latérales 48 entre l'infrastructure et la superstructure du four 46 jusqu'à l'extérieur de l'enceinte du four. A l'extérieur du four, ces rails de support 47 reposent sur des bandes transporteuses étroites 50 qui ont les forme de bandes sans fin et qui sont entraînées à une vitesse réglée par des rouleaux de renvoi 51 entraînés. Sur les bandes transporteuses 50 sont fixés des organes de retenue formant un U 52 sur lesquels les rails de support 47 des plateaux de support à membrane 6 reposent dans une position respective fixée.

Dans ce cas également, il est à nouveau important que les feuilles de verre 2 soient déposées dans le poste de chargement sur le plateau de support à membrane 6 dans une position fixée avec précision par rapport à ce plateau. Dans le poste d'enlèvement à l'extrémité chaude du four, le plateau-ventouse reprenant la feuille de verre doit alors simplement être positionné avec référence au plateau de support à membrane 6, ce qui peut cependant être facilement réalisé par exemple par un accouplement mécanique entre le plateau de support à membrane et le plateau-ventouse à l'instant de la reprise de la feuille de verre.

Lorsque la feuille de verre 2 a été soulevée au-dessus du plateau de support à membrane 6 à l'extrémité chaude du four, le plateau de support à membrane 6 est sorti du four par la bande transporteuse 50 et ensuite par un autre dispositif non représenté, les rails de support 47 étant amenés sur des supports rigides 53 d'un chariot 54. Le chariot 54 est mobile sur des roues 55 sur des rails 56 transversalement à l'axe longitudinal du four 46 vers deux positions d'extrémité. Tandis que le chariot 54, dans la position d'extrémité représentée aux dessins, reçoit le plateau de support à membrane 6 venant du four 46, le plateau de support à membrane 6, dans l'autre position d'extrémité du chariot 54, est transféré sur des bandes transporteuses au moyen desquelles les plateaux de support à membrane 6 sont transportés et ramenés à l'extrémité froide du four. A cet endroit, ils sont à nouveau amenés au moyen d'un système de transport transversal correspondant au système du chariot décrit dans une position dans laquelle ils sont repris par les bandes transporteuses 50 et transportés à nouveau à travers le four 46.

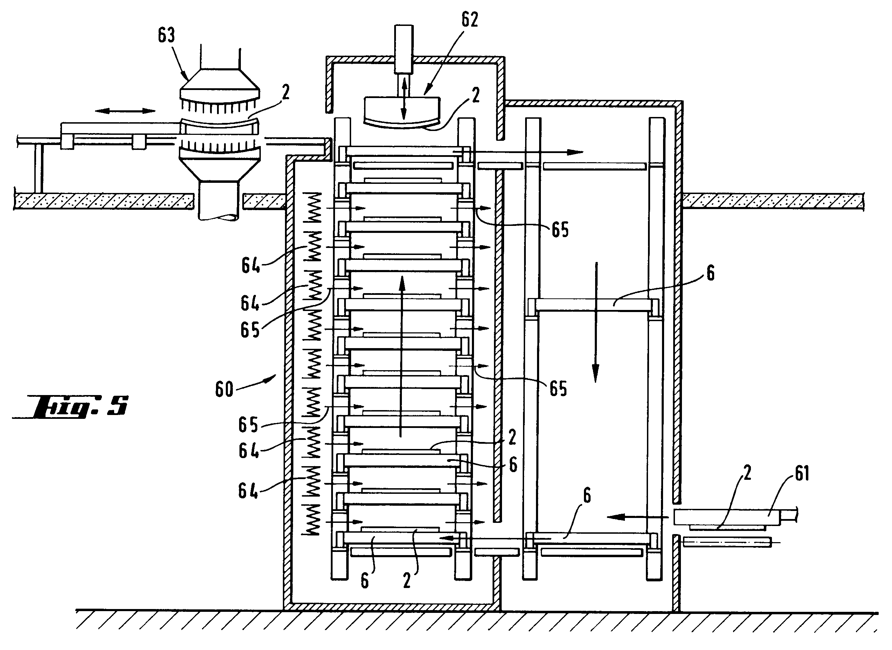

La figure 5 illustre une réalisation de l'invention au sein d'un four 60 dont l'axe longitudinal est vertical. Un tel four peut présenter différents avantages. Tout d'abord il permet un gain de place considérable, tout du moins d'un point de vue surfacique. Par ailleurs, il autorise un chauffage plus rapide des feuilles de verre du fait de la part de chauffage par convection plus importante dans ce type de four. Ce chauffage plus rapide est bien entendu particulièrement intéressant dans le cas de feuilles de verre mince. En ce qui concerne l'arrivée des feuilles de verre 2 froides, celle-ci peut se faire comme dans le cas des fours tunnels décrits précédemment. Sur la figure 5, celle-ci se fait à l'aide d'un plateau-ventouse 61. A l'issue de la phase de réchauffage, les feuilles de verre 2 sont amenées de façon classique à un poste de bombage 62 puis à un poste de trempe 63. Sur la figure 5, le poste de bombage est situé au sein du four 60. La sortie des feuilles de verre du four se faisant de la même façon que dans le cas des fours tunnels. Au sein du four 60, les plateaux supports 6 suivent un mouvement vertical selon la direction F, c'est-à-dire de bas en haut. Les feuilles de verre libérées vers le poste de bombage 62, les plateaux supports 6 sont ramenés en position de réception de feuilles de verre froides. Le mouvement de ces plateaux se fait alors selon une direction verticale du haut vers le bas. Des dispositifs autorisant le déplacement des plateaux supports 6 selon une direction verticale, ceux-ci conservant une position horizontale notamment lorsqu'ils supportent une feuille de verre 2, sont analogues à ceux décrits précédemment dans le cas de déplacements horizontaux dans les fours tunnels.

Le chauffage quant à lui peut être obtenu par des résistances électriques 64 avantageusement couplées à des dispositifs de ventilation non représentés sur les figures. Ces dispositifs entraînent une circulation d'air selon les directions indiquées par les flèches 65 et peuvent contribuer à augmenter encore la vitesse de chauffage.

Selon une autre variante non représentée, l'arrivée des feuilles de verre 2 peut se faire au niveau supérieur et leur sortie au niveau inférieur. Dans un tel cas, le mouvement des plateaux supports durant la phase de chauffage et donc celui des feuilles de verre 2 se fait selon une direction verticale descendante ce qui peut encore favoriser le chauffage par convection.

## Revendications

1. Four à passage continu pour le chauffage de feuilles de verre à leur température de bombage et/ou de trempe, comportant un système de transport acheminant les feuilles de verre en position horizontale à travers le four, **caractérisé en ce que** le système de transport, à l'intérieur du four, comprend une série de plateaux de support (6) qui comportent chacun un cadre rigide (14) qui est garni, à la manière d'une peau de tambour, d'une membrane (8) résistant à la chaleur, à titre de surface d'appui pour une feuille de verre (2).

2. Four à passage continu selon la revendication 1, **caractérisé en ce que** l'axe longitudinal du four est horizontal.

3. Four à passage continu selon la revendication 1, **caractérisé en ce que** l'axe longitudinal du four est vertical.

4. Four à passage continu selon l'une des revendications 1 à 3, **caractérisé en ce que** la membrane (8) est faite d'un tissu résistant à la chaleur.

5. Four à passage continu selon la revendication 4, **caractérisé en ce que** le tissu résistant à la chaleur est un tissu de fibres métalliques résistant à la chaleur.

6. Four à passage continu selon la revendication 4 ou 5, **caractérisé en ce que** la membrane (8) est constituée de deux épaisseurs (17, 18), l'épaisseur inférieure (17) étant faite d'un tissu tissé à fils de chaîne et de trame qui peut être tendu sous une tension relativement élevée sur un cadre de support (14), et l'épaisseur supérieure (18) étant faite d'un tissu à mailles dont la structure s'adapte à la surface de la feuille de verre.

7. Four à passage continu selon l'une des revendications précédentes, **caractérisé en ce que** chaque plateau de support à membrane (6) est pourvu d'un dispositif de tension (22, 21, 22) par lequel la tension de la membrane (8) peut être réglée.

8. Four à passage continu selon l'une des revendications précédentes, **caractérisé en ce que** les dimensions intérieures du cadre de support rigide (14) du plateau de support à membrane (6) sont supérieures aux dimensions en plan des feuilles de verre.

9. Four à passage continu selon l'une des revendications précédentes, **caractérisé en ce que** les plateaux de support à membrane (6) sont montés fixes à la manière d'un transporteur à plateaux sur une chaîne transporteuse sans fin (27) qui, y compris sont brin inférieur (29), est installée à l'intérieur du four (26).

10. Four à passage continu selon l'une des revendications 1 à 8, **caractérisé en ce que** les plateaux de support à membrane (6) sont pourvus de rails de support (47) qui s'étendent vers l'extérieur latéralement à travers des fentes (48) entre la superstructure et l'infrastructure du four (46) et sont posés sur des bandes transporteuses (50) installées à côté du four (46), et qu'à l'extérieur du four (46) est prévu un chariot (54) mobile transversalement à l'axe longitudinal du four (46) et un système de transport formé de bandes transporteuses (58) s'étendant parallèlement au four (46) pour renvoyer les plateaux de support à membrane (6) vers l'extrémité froide du four.

11. Four à passage continu selon l'une des revendications précédentes, **caractérisé par** des plateaux-ventouses mobiles horizontalement (39, 44) pour déposer les feuilles de verre (2) des plateaux de support à membrane (6), ainsi que par des moyens pour le positionnement mutuel des plateaux-ventouses (39, 44) et du plateau de support à membrane (6) concemé, à l'instant du transfert ou de la réception des feuilles de verre (2).

## Claims

1. Continuous furnace for the heating of glass sheets to their bending and/or toughening temperature, having a transportation system conveying the glass sheets in a horizontal position through the furnace, characterised in that the transportation system, inside the furnace, comprises a series of support plates (6) which each have a rigid frame (14) fitted, like a drumskin, with a heat-resistant membrane (8) as a support surface for a glass sheet (2).

2. Continuous furnace according to Claim 1, characterised in that the longitudinal axis of the furnace is horizontal.

3. Continuous furnace according to Claim 1, characterised in that the longitudinal axis of the furnace is vertical.

4. Continuous furnace according to one of Claims 1 to 3, characterised in that the membrane (8) is made from a heat-resistant cloth.

5. Continuous furnace according to Claim 4, characterised in that the heat-resistant cloth is a cloth made of heat-resistant metallic fibres.

6. Continuous furnace according to Claim 4 or 5, characterised in that the membrane (8) is formed from two thicknesses (17, 18), the bottom thickness (17) being made from a woven cloth which can be tensioned at a relatively high tension on a support frame (14), and a top thickness (18) being made from a knitted cloth whose structure adapts to the surface of the glass sheet.

7. Continuous furnace according to one of the preceding claims, characterised in that each membrane support plate (6) is provided with a tension device (22, 21, 22) by means of which the tension of the membrane (8) can be adjusted.

8. Continuous furnace according to one of the preceding claims, characterised in that the inside dimensions of the rigid support frame (14) of the membrane support plate (6) are greater than the dimensions of the glass sheet in plan view.

9. Continuous oven according to one of the preceding claims, characterised in that the membrane support plates (6) are mounted fixedly like a tray conveyor on an endless chain conveyor (27) which, including its lower length (29), is installed inside the furnace (26).

10. Continuous furnace according to one of Claims 1 to 8, characterised in that the membrane support plates (6) are provided with support rails (47) which extend outwards laterally through slots (48) between the upper structure and lower structure of the furnace (46) and are placed on conveyor belts (50) installed alongside the furnace (46), and in that, outside the furnace (46) there is provided a carriage (54) able to move transversally to the longitudinal axis of the furnace (46) and a transportation system formed by conveyor belts (58) extending parallel to the furnace (46) in order to return the membrane support plate (6) towards the cold end of the furnace.

11. Continuous furnace according to one of the preceding claims, characterised by suction plates (39, 44) able to move horizontally in order to move the glass sheets (2) from the membrane support plates (6), and by means for the mutual positioning of the suction plates (39, 44) and of the membrane support plate (6) concerned, at the time of transfer or reception of the glass sheets (2).

## Patentansprüche

1. Durchlaufofen zum Erwärmen von Glasscheiben auf ihre Biege- und/oder Vorspanntemperatur, mit einem die Glasscheiben in horizontaler Lage durch den Ofen fördernden Transportsystem, **dadurch gekennzeichnet**, daß das Transportsystem innerhalb des Ofens eine Reihe von Tragplatten (6) umfaßt, die jeweils einen starren Rahmen (14) aufweisen, der trommelfellartig mit einer hitzebeständigen Membran (8) als Auflagefläche für eine Glasscheibe (2) bespannt ist.

2. Durchlaufofen nach Anspruch 1, **dadurch gekennzeichnet**, daß die Längsachse des Ofens horizontal verläuft.

3. Durchlaufofen nach Anspruch 1, **dadurch gekennzeichnet**, daß die Längsachse des Ofens vertikal verläuft.

4. Durchlaufofen nach einem der Ansprüche 1 bis 3, **dadurch gekennzeichnet**, daß die Membran (8) aus einem hitzebeständigen Gewebe besteht.

5. Durchlaufofen nach Anspruch 4, **dadurch gekennzeichnet**, daß das hitzebeständi-ge Gewebe ein hitzebeständiges Metallfasergewebe ist.

6. Durchlaufofen nach Anspruch 4 oder 5, **dadurch gekennzeichnet**, daß die Mem-bran (8) aus zwei Lagen (17,18) besteht, von denen die untere Lage (17) aus einem Gewebe mit Kett- und Schußfäden besteht und mit einer verhältnismäßig hohen Spannung über den Tragrahmen (14) spannbar ist, und die obere Lage (18) aus einem Maschengewebe besteht, dessen Struktur sich der Oberfläche der Glasscheibe anpaßt.

7. Durchlaufofen nach einem der vorstehenden Ansprüche, **dadurch gekennzeichnet**, daß jede Membran-Tragplatte (6) mit einer Spannvorrichtung (22,21,22) versehen ist, durch die die Spannung der Membran (8) einstellbar ist.

8. Durchlaufofen nach einem der vorstehenden Ansprüche, **dadurch gekennzeichnet**, daß die Innenabmessungen des starren Tragrahmens (14) der Membran-Tragplatte (6) größer sind als die Flächenabmessungen der Glasscheiben.

9. Durchlaufofen nach einem der vorstehenden Ansprüche, **dadurch gekennzeichnet**, daß die Membran-Tragplatten (6) in der Art eines Platten-Bandförderers fest auf einer endlosen Förderkette (27) montiert sind, die einschließlich ihres Untertrums (29) innerhalb des Ofens (26) angeordnet ist.

10. Durchlaufofen nach einem der Ansprüche 1 bis 8, **dadurch gekennzeichnet**, daß die Membran-Tragplatten (6) mit Tragschienen (47) versehen sind, die seitlich durch Schlitze (48) zwischen dem Oberteil und dem Unterteil des Ofens (46) nach außen ragen und auf neben dem Ofen (46) angeordneten Transportbändern (50) aufliegen, und daß außerhalb des Ofens (46) ein quer zur Längsachse des Ofens (46) verfahrbarer Schlitten (54) und ein aus parallel zum Ofen (46) verlaufenden Transportbändern (58) bestehendes Transportsystem für die Rückführung der Membran-Tragplatten (6) zum kalten Ofenende vorgesehen sind.

11. Durchlaufofen nach einem der vorstehenden Ansprüche, **gekennzeichnet durch** horizontal verfahrbare Saugplatten (39,44) zum Auflegen der Glasscheiben (2) auf die Membran-Tragplatten (6) und zum Abnehmen der heißen Glasscheiben (2) von den Membran-Tragplatten (6), sowie durch Mittel zur gegenseitigen Positionierung der Saugplatten (39,44) zur jeweiligen Membran-Tragplatte (6) im Zeitpunkt der Übergabe bzw. der Aufnahme der Glasscheiben (2).
